# EUROPEAN PATENT SPECIFICATION

(11) **EP 3 786 446 B1**
(45) Date of publication and mention of the grant of the patent: **21.01.2026**
(21) Application number: 19193561.8
(22) Date of filing: 26.08.2019
(51) Int. Cl.: F03D 7/02

(54) **METHOD FOR OPERATING A WIND TURBINE**
VERFAHREN ZUM BETRIEB EINER WINDTURBINE
PROCÉDÉ DE FONCTIONNEMENT D'UNE ÉOLIENNE

(43) Date of publication of application: 03.03.2021
(73) Proprietor: Wobben Properties GmbH, 26607 Aurich (DE)
(72) Inventor: Zijlstra, Martijn, 26607 Aurich (DE)
(74) Representative: Eisenführ Speiser

(56) References cited:
- WO-A1-2018/033191
- US-A1- 2010 286 835
- US-A1- 2018 347 543
- US-A1- 2019 113 020
- VAN DER HOEK DAAN ET AL: "Comparison of Down-Regulation Strategies for Wind Farm Control and their Effects on Fatigue Loads", 2018 ANNUAL AMERICAN CONTROL CONFERENCE (ACC), AACC, 27 June 2018 (2018-06-27), pages 3116 - 3121, XP033387377, DOI: 10.23919/ACC.2018.8431162

## Description

The present invention concerns a method for operating a wind turbine. The present invention also concerns a corresponding wind turbine. The invention also concerns an arrangement of wind turbines. The invention is also directed to a wind farm.

Wind turbines are well known, they produce electrical power from wind. In a normal operational mode a wind turbine produces as much power as possible according to the prevailing wind conditions up to a maximum power. Such maximum power maybe defined by the wind turbine and maybe a nominal power of the wind turbine. If there is not enough wind to reach such maximum power, i.e. if the wind speed is below rated wind speed, the wind turbine is operated in a partial load situation.

In such partial load situation the wind turbine is controlled by means of a rotor speed curve defining the rotor speed for each operating point of the wind turbine. There are different possibilities to implement such rotor speed curve but generally speaking the rotor speed according to such rotor speed curve is increasing with increasing wind speed.

Even in such partial load situation there may be situations and/or regulations forcing the wind turbine to limit the rotor thrust. Such rotor thrust is acting on the rotor of the wind turbine. Often a wind turbine is not just operated as a single wind turbine, but it is operated within a wind farm having a plurality of wind turbines. Depending on the wind direction a first wind turbine may be arranged just in front of a second wind turbine, i.e. the second wind turbine is in lee of the first wind turbine.

In such situation the rotor of the first wind turbine produces turbulences which act on the rotor of the second wind turbine. Depending on the wind speed such turbulences may be that high, that they stress the rotor of the second wind turbine. In such situation the first wind turbine shall reduce its operation such that its rotor thrust is reduced and as a consequence the turbulences produced by the rotor of the first wind turbine are also reduced. Accordingly, the stress on the rotor of the second wind turbine can be reduced.

It is also possible that reducing the rotor thrust of the first wind turbine makes sense in order to increase the overall power of the first and the second wind turbine. That is the case if the turbulences produced by the first wind turbine significantly reduce the power that can be produced by the second wind turbine and in that case it might be possible that reducing the thrust of the first wind turbine reduces the produced power by the first wind turbine by an amount that is smaller than the amount by which the power produced by the second wind turbine can be increased.

If the rotor thrust of a wind turbine needs to be reduced the rotor blades of its rotor are pitched partly out of the wind, e.g. by a few degrees or more. This pitching of the rotor blades leads to said reduced rotor thrust and accordingly the rotor speed is reduced according to the rotor speed curve. That is because the pitching of the rotor blades decreases the rotor thrust and such decrease of the rotor thrust has a similar effect as if the wind speed would decrease. Accordingly, a new rotor speed may result according to the rotor speed curve as if the wind speed would have decreased.

However, the actual wind speed has not decreased and accordingly the new rotor speed according to the rotor speed curve is in fact not adapted to the actual wind speed. In particular a tip speed ratio may result which is not as optimal as the tip speed ratio underlying the originally planned rotor speed curve.

A further result may be that less power is produced than could be possible even with reduced rotor thrust.

Document VAN DER HOEK, DAAN ET AL: "Comparison of Down-Regulation Strategies for Wind Farm Control and their Effects on Fatigue Loads", 2018 ANNUAL AMERICAN CONTROL CONFERENCE (ACC), AACC, 27 June 2018, pages 3116-3121, describes three down-regulation strategies for a wind farm control by amending a tip-speed-ratio and/or a blade angle.

Accordingly, one object of the present invention is to suggest a solution addressing at least one of the above mentioned problems. In particular a solution shall be proposed which enables to reduce the rotor thrust but still provides the possibility to produce a relatively high amount of power in view of the reduced rotor thrust. At least an alternative solution with respect to known solutions shall be proposed.

According to the invention a method according to claim 1 is proposed. This method for operating a wind turbine is based on a wind turbine comprising a rotor operable with variable rotor speed. The rotor has rotor blades with adjustable pitch angles. The rotor may have three rotor blades.

According to the method for operating the wind turbine the wind turbine produces electrical power from wind. The wind causes a rotor thrust acting on the rotor depending on the rotor speed and depending on the pitch angle. Accordingly, for a given wind speed a rotor thrust will result depending on the rotor speed and the pitch angle.

In a partial load situation when the wind is blow rated wind speed the wind turbine is controlled by means of a speed control for controlling the rotor speed depending on a given pitch angle. Such given pitch angle may be a constant pitch angle or it may as well depend on the rotor speed and may be given in a look up table depending on the rotor speed. However, most commonly it is suggested to have a constant pitch angle for the partial load situation.

The speed control for controlling the rotor speed may be designed by controlling a generator torque depending on the rotor speed. One possibility is that there is a relationship defined between the generator torque and the rotor speed. This relationship can be provided as a torque against rotor speed curve, to give one example. According to this relationship for each rotor speed there is a generator torque given. In operation the rotor speed is measured and according to said relationship, in particular according to said torque against rotor speed curve, a corresponding generator torque is set.

If this generator torque is smaller than a rotor torque resulting from the wind acting on the rotor, the rotor will accelerate and thus the rotor speed will further increase. As a result the relationship defined between the generator torque and the rotor speed will provide a new generator torque depending on this new rotor speed. This way a rotor speed with corresponding generator torque will be found such that the generator torque equals the torque acting on the rotor resulting from the wind. This way a stable working point and thus a stable rotor speed is found. This way the rotor speed can be controlled even without measuring the wind speed. Accordingly this is one possibility to provide the speed control.

**In addition** it is suggested that the speed control for controlling the rotor speed depends on a given pitch angle. Accordingly, the speed control is not always the same but depends on the given pitch angle. One possibility is to provide a look up table comprising a relationship between a speed control and a given pitch angle. Accordingly for each pitch angle a corresponding speed control can be picked.

Based on the example given above the speed control can be defined by a relationship between the generator torque and the rotor speed, using a generator torque against rotor speed curve. There may thus be a plurality of such curves defined and one of such curves may be picked depending on the given pitch angle. This way the speed control depends on the given pitch angle.

It is further suggested that in a normal operational mode when the operation of the wind turbine is not a curtailment mode, a normal speed control is used controlling the rotor speed in combination with an optimal pitch angle. Such optimal pitch angle may be defined as a pitch angle leading to an operation with an optimized tip speed ratio *λ*. An optimized tip speed ratio *λ* can be understood as a tip speed ratio *λ* having a maximal power coefficient Cp. I.e. an optimized tip speed ratio *λ* provides for an optimal power coefficient Cp and thus for maximum power generation. In other words an optimal pitch angle provides for an optimal power generation.

It is further suggested that in a curtailment mode when the rotor thrust is to be limited, a curtailment speed control, which is different to the normal speed control, in combination with a curtailment pitch angle, different to the optimal pitch angle, is used in order to reduce the rotor thrust.

Accordingly, it is suggested to provide an individual combination of a speed control and a pitch angle. Accordingly, the normal speed control is combined with a normal pitch, i.e. the optimal pitch angle, whereas a curtailment speed control is combined with a curtailment pitch angle. There may be many combinations or pairs of a curtailment speed control combined with a curtailment pitch angle. Accordingly for each curtailment pitch angle there is a curtailment speed control.

According to the invention it was understood that in some situations the rotor thrust must be reduced. It was found that nevertheless even for such reduced rotor thrust, i.e. in a curtailment mode the operation of the wind turbine may still be optimized within such new limit, i.e. within the new limit given by the curtailment mode. To provide such optimization it is suggested to use a particular curtailment speed control for the particular curtailment pitch angle.

However, providing a particular speed control in a normal operational mode as well as particular curtailment speed control in a curtailment mode may also be adapted for the operation of the wind turbine at or above rated wind speed.

According to one aspect it is suggested to have a plurality of pairs of curtailment speed controls in combination with curtailment pitch angles. Preferably such curtailment pitch angles may be define step wise by one degree steps, for example 20 steps from 1 to 20 degrees above pitch angle. For each of this 20 curtailment pitch angles there is one curtailment speed control.

According to one aspect the speed control controls the rotor speed by adjusting the produced electrical power and in addition or as an alternative solution the speed control controls the rotor speed by adjusting a generator torque. Controlling the rotor speed by adjusting a generator torque has already been explained. Similar the produced electrical power may be adjusted in order to control the rotor speed. Setting the produced electrical power to a particular value results in a generator torque and that results in a fixed rotor speed if this resulting generator torque equals the rotor torque which results from the wind acting on the rotor. If there is no equilibrium between the generator torque and the rotor torque, the rotor speed will either increase or decrease resulting in a new set value for the produced electrical power and this way a stable working point having a constant rotor speed will soon be found.

Adjusting the generator torque has the advantage that such generator torque can directly be set without considering the rotor speed. Of course the further steps, including the particular control of the generator in order to apply the generator torque according to the set value may consider the rotor speed.

Accordingly, the control of the rotor speed may also be performed by adjusting the produced electrical power as well as by adjusting the generator torque.

According to one aspect the curtailment pitch angle defines a lower limit pitch angle being larger than the optimal pitch angle and the method is adapted to further increase the pitch angle above the lower limit pitch angle depending on an operating point of the wind turbine. Accordingly the curtailment pitch angle is not a fixed value but a lower limit.

Starting from a situation without reduced rotor thrust the wind turbine may operate with an optimal pitch angle. In order to reduce the rotor thrust the pitch angle will be increased to a curtailment pitch angle and thus to the lower limit pitch angle. As a consequence the pitch angle shall not drop below this lower limit pitch angle as that would increase the rotor thrust again.

However, if a particular operating point of the wind turbine makes a further increased pitch angle necessary or desirable the pitch angle may increase accordingly. However, the pitch angle may not decrease below the lower limit pitch angle.

This way the curtailment pitch angle and thus a reduction of the rotor thrust can easily be implemented. It is basically only necessary to set said lower limit pitch angle and besides that let the wind turbine operate as usual. Only if such usual operation would set a pitch angle below the lower limit pitch angle, such operation will be avoided and any decrease of the pitch angle will only be allowed down to the lower limit pitch angle, but not below it.

But besides this lower limit pitch angle the wind turbine may operate as usual. Of course if the operating point of the wind turbine is not aiming to further change the pitch angle, the wind turbine will be operated with the curtailment pitch angle and thus with a pitch angle being equal to the lower limit pitch angle. In this situation the curtailment speed control is used.

As one aspect it is preferred to adapt a speed control in accordance with an increased pitch angle. That means if the rotor thrust shall be reduced the lower limit pitch angle is set defining the curtailment pitch angle and thus if the curtailment pitch angle is used the curtailment speed control is used as well. However, if the pitch angle shall further be increased for any other reason, the rotor speed shall further be decreased, which may also be just temporarily for a short time. Such increase of the pitch angle can easily be performed without having a conflict with respect to the curtailment mode, as the curtailment mode only sets a lower limit pitch angle.

It is also preferred to adapt a speed control in accordance with such increased pitch angle. In other words the lower limit pitch angle defines a curtailment pitch angle and suggests to use a corresponding curtailment speed control, but if the pitch angle is further increased the control may deviate from the curtailment speed control. In that case the speed control may be adapted accordingly.

**According** to one aspect the curtailment speed control is designed such that the curtailment pitch angle is set to a value above the optimal pitch angle and the curtailment speed control controls the rotor speed such that the produced electrical power is maximized. The underlying idea is, that even though a curtailment mode must be used reducing a rotor thrust but also reducing the power production, there is still the possibility to optimize such control, i.e. to maximize the produced electrical power. That is done by defining and using a curtailment speed control rather than just increasing the pitch angle without also adapting the speed control.

It was found that the optimal speed control is assumed to be optimal for the optimal pitch angle but not to be optimal for the curtailment pitch angle, i.e. not being optimal to an increased pitch angle. Accordingly, selecting a different speed control. i.e. selecting a curtailment speed control is suggested and the suggested design criteria is to maximize the electrical power produced by the wind turbine. Preferably this is done by selecting a torque-speed-curve. Such torque-speed-curve provides an adequate torque value for each speed value, i.e. for each rotor speed value, in order to produce maximal power with the selected curtailment pitch angle.

According to one aspect the method is provided such that for changing operation of the wind turbine from the normal operational mode to the curtailment mode, the pitch angle is changed stepwise from the optimal pitch angle to the curtailment pitch angle using intermediate curtailment angles for each step. At each angle step the wind turbine is operated using an intermediate curtailment speed control corresponding to the intermediate curtailment angle.

For this aspect it is suggested to use given angle steps, i.e. one angle step each, and such angle step may have a size of 0,5° to 5°, preferably it may have a size of 1° to 2°. It was realized that such stepwise changing of the operation from normal operational mode to the curtailment mode can improve the stability of the control. By providing a stepwise change the wind turbine steps from one stationary operation to a next stationary operation. For each stationary operation the wind turbine can thus remain in a fixed operational mode for a while. In case the changing even for such small steps causes a slight swinging behavior or an initiation of a swinging behavior, the wind turbine may have time to stabilize after each step. Accordingly the suggested stepwise change improves the stability.

If according to one preferred embodiment the given angle step is selected to have a size of 1° there would be 20 steps in order to change the pitch angle by 20°. Such change can be conducted in 120 seconds and accordingly each step takes about 6 seconds. It was thus realized that even though a stepwise change is performed, the changing time being 120 seconds is still reasonable. In particular it was realized that changing from a normal operational mode to curtailment mode is usually not too urgent. Accordingly each step may take a time of 3 to 10 seconds. It is to be noted that the mere mechanical turning of the rotor blade in order to change the pitch angle is a lot faster and could be performed by 1° per second to 5° per second.

According to one aspect it is suggested that the operation of the rotor is characterized by a power coefficient Cp and wherein the curtailment speed control is designed such that the power coefficient Cp is maximized. The power coefficient indicates - simply speaking - how much percentage of wind power can be extracted by the aerodynamic rotor out of the wind. An optimal power coefficient Cp is approximately 0.4 and it is known to the person skilled in the art that the power coefficient cannot become much bigger for physical reasons, i.e. physical limits. However such power coefficient Cp depends on the pitch angle and the tip speed ratio. Accordingly based on that the curtailment speed control can be designed to maximize the power coefficient Cp.

According to the invention it is thus suggested to design the curtailment speed curve such that, depending on the curtailment pitch angle, a tip speed ratio is set such that the electrical power is maximized and/or such that the power coefficient is maximized. It is thus suggested to set a pitch speed ratio based on the curtailment pitch angle in order to find the maximal power. The optimal power coefficient or the maximum power coefficient may correspond to the maximal electrical power to be produced. However these values may not correspond to the identical tip speed ratio, as there might be small differences due to further aspects of power loss within the wind turbine. However the maximized electrical power and the maximized power coefficient shall occur approximately at the same tip speed ratio.

According to the invention it is suggested that the curtailment speed control is designed by applying an optimization criterion, wherein the optimization criterion can be illustrated as a pitch angle curve showing the pitch angle depending on the tip speed ratio and depending on the power coefficient. Based on that all possible pitch angles depending on the tip speed ratio and depending on the power coefficient form a three-dimensional surface and the pitch angle curve corresponds to a curve following the gradient, i.e. the highest incline on the three-dimensional surface. This way for optimizing the curtailment speed control the tip speed ratio as well as the power coefficient can be considered at the same time. The optimization criterion is thus defined to choose tuples of pitch angles and tip speed ratios according to said curve that follows the gradient on said three-dimensional surface. This criterion may of course also be defined by a mathematical description. The three-dimensional surface is just used to illustrate the suggested solution.

According to this optimization criterion said tuples of pitch angles and tip speed ratios can be found and from the tip speed ratio, which is defined as the quotient of the speed of the rotor blade tip to the wind speed, the rotational speed of the rotor can be calculated. In order to calculate the rotor speed the wind speed may also be needed. However, the wind speed can be derived using the power coefficient and the tip speed.

According to one aspect a full load situation is considered. In a full load situation the wind is at or above rated wind speed. For this full load situation it is suggested to operate the wind turbine in the normal operational mode with rated rotor speed, with a rated generator torque and with rated power. In the curtailment operational mode it is suggested to operate the wind turbine with a curtailment rotor speed being below the rated rotor speed, and with increased generator torque being above rated generator torque and/or with rated power. Accordingly it is suggested to operate the wind turbine in the full load situation with a generator torque being above rated generator torque and/or with rated power.

The underlying idea is that rated torque, rated power and rated rotor speed are defined as a limit as the operation of the wind turbine shall not go beyond such maximum operation point, in order to avoid a damage to the wind turbine. However, in case of a curtailment the rotor speed is reduced and in that case the generator torque could be above rated generator torque. As the rotor speed is reduced there will also be a higher generator torque needed in order to be able to produce rated power. It was found that with reduced rotor speed the generator torque can be increased beyond rated generator torque. However, it is also possible to use a generator torque being above generator torque but without producing rated power. Such operational point could at least be realized to produce more power than would be possible with reduced speed and only rated generator torque.

According to one aspect it is suggested that a set of curtailment speed controls is provided, each curtailment speed control of that set comprises a minimum pitch angle. For operating the wind turbine one curtailment speed control of the set of curtailment speed controls is selected depending on the amount of rotor thrust to be limited.

Accordingly a set of curtailment speed controls is prepared and can be provided in a look-up table. Which curtailment speed control and thus which curtailment pitch angle shall be picked depends on the wanted or needed rotor thrust limit or rotor thrust reduction. One possibility is to allocate such rotor thrust reductions or limits to a particular curtailment speed control and corresponding curtailment pitch angle. Such relationship can be found by making a couple of tests, but it may also be found by making simulations for all curtailment speed controls with their curtailment pitch angle also simulating the corresponding rotor thrust limitation or rotor thrust reduction.

According to one aspect it is suggested that in a transient operational situation where the operation shifts from partial load situation to a full load situation the curtailment pitch angel increases with increasing wind speed. Preferably the pitch angle increases depending on an increase of the produced electrical power, in particular with a predefined pitch angle to power slope.

This aspect is based on the assumption that in a partial load situation the pitch angle, be it a normal pitch angle or curtailment pitch angle, is basically constant, whereas in the full load situation the pitch angle needs to be increased with increasing wind speed in order to control the wind turbine on rated power and rated rotor speed. However, in a transient operational situation where the wind speed has not yet reached rated wind speed the pitch angle is increased, i.e. is increased before the wind speed reaches rated wind speed. This may be at a wind speed of 10% below rated wind speed. For a curtailment mode operation it is thus suggested to also increase the curtailment pitch angle before the wind speed has reaches rated wind speed ,e.g. at a wind speed of 10% below rated wind speed. This is also suggested for a situation where a curtailment operational mode is suggested in order to reduce the overall load on the wind turbine as such, i.e. not reduce the stress on a further wind turbine in lee, but to reduce the stress on the actual wind turbine.

When changing the curtailment pitch angle in this transient operational situation it is also suggested to switch accordingly to other curtailment rotor speed curves, i.e. to curtailment rotor speed curves assigned to the changed curtailment pitch angle.

According to one aspect such change of the pitch angle is done such that a predefined pitch angle to power slope is given and such predefined pitch angle to power slope defines an increase of the pitch angle of a particular value with respect to an increase of generator power with respect to a particular value, e.g. the pitch angle is increased by e.g. 0.3° per 100 kW increase of generated power.

According to one aspect the curtailment operation is chosen depending on at least one of the following criteria or information. One criteria or information is an azimuth position of the wind turbine. According to such azimuth position of the wind turbine the wind direction can be determined and accordingly it can be determined whether a second wind turbine is behind the wind turbine, i.e. if the second wind turbine is in lee of the actual wind turbine. In that case the wind turbine may produce turbulences which affect such second wind turbine in lee. In order to avoid or reduce such turbulences a curtailment operation may be chosen.

Another criteria or information is a measured or determined wind speed. If the wind speed is small, a curtailment operation may not be necessary, whereas with high wind speed such curtailment operation may be necessary and can then be chosen dependent on the measured or determined wind speed.

Another criteria or information is a measured or determined intensity of gustiness or a turbulence intensity. If there is a high intensity of gustiness or turbulence intensity a curtailment operation may be chosen in order to reduce any too high load on the wind turbine.

Another criteria or information is a measured or determined wake effect, according to which the wind turbine influences a wind field of a further wind turbine arranged in lee of the wind turbine. According to this aspect any influence of the wind turbine in lee may directly be determined. One possibility is that the further wind turbine which is arranged in lee measures such wind field and transmits it as measured data to the wind turbine which may depending on such measurement have to be put into said curtailment operation.

A further criteria or information may be a signal received from a further wind turbine arranged in lee of the wind turbine. Such further wind turbine in lee may measure the wind field as explained above. But it may also measure any loads it receives, i.e. loads on the rotor blades, or it may just compare its output power to the output power which could be produced according to the prevailing wind condition. One possibility is that the further wind turbine arranged in lee directly sends a signal commanding the actual wind turbine to switch over to curtailment operation. It is also possible that the signal gives particular values for the curtailment pitch angle or curtailment rotor speed

One possibility for the criteria or information is to have a signal received from a central farm control unit of a wind farm, if the wind turbine is part of the wind farm. Such central farm control unit may measure wind direction and wind speed and determine whether a wind turbine produces high turbulences for a wind turbine being arranged in lee of said actual wind turbine. However, the central farm control unit may also monitor which wind turbine is in operation and in case said further wind turbine being arranged in lee of the actual wind turbine is for any reason not operating, the central farm control unit may also consider this and in that case may decide that switching into the curtailment operation is not necessary.

One criteria or information may also be a requirement for reducing noise emission. It was found that reducing the rotor thrust by means of said curtailment operation also results in reducing noise emission. Accordingly, if there is a requirement for reducing noise emission, such requirement can be met by switching into the curtailment operation. Accordingly, in case of a requirement for noise reduction said curtailment operation with maximized power output may also be applied to meet such requirement for reducing noise emission.

The invention is also directed to a wind turbine. Such wind turbine is designed as explained above and it comprises a turbine control adapted to operate the wind turbine. The turbine control is also adapted to operate the wind turbine in a partial load situation. And the turbine control is adapted to operate the wind turbine according to any of the aspects explained above.

The invention is also directed to an arrangement of wind turbines, including a wind farm comprising a first wind turbine according to any of the wind turbines explained above, comprising a second wind turbine arranged in proximity of the first wind turbine, and communication means connecting the first and the second wind turbine to exchange information to be used for operating at least the first wind turbine.

The second wind turbine is thus arranged in the proximity of the first wind turbine such that depending on the wind direction the second wind turbine will be arranged in lee of the first wind turbine and will be affected by turbulences produced by the first wind turbine depending on the wind speed. In that case the second wind turbine may communicate with the first wind turbine in order to make the first wind turbine switch into a curtailment operational mode in order to reduce the turbulences affecting the second wind turbine.

The invention is also directed to a wind farm comprising a plurality of wind turbines and at least one of the wind turbines is designed as explained above with respect to any of the explained aspects which are directed to a wind turbine. The wind farm may also have a central control unit in order to control the wind turbines as explained with respect to any of the embodiments mentioned above.

The invention will now be explained by way of example based on embodiments and using the enclosed figures.
- Figure 1: shows a wind turbine in a perspective view.
- Figure 2: shows a wind farm schematically.
- Figure 3: shows in a diagram the power coefficient depending on the pitch angle and tip speed ratio.
- Figure 4: shows a further diagram of the power coefficient depending on the pitch angle and tip speed ratio but with an optimized trajectory for a curtailment operating point..
- Figure 5: shows two diagrams with a first diagram showing a set of rotor speed curves and a second diagram showing a set of pitch angle curves.
- Figure 6: shows a flow chart for illustrating a method for operating a wind turbine according to the invention.

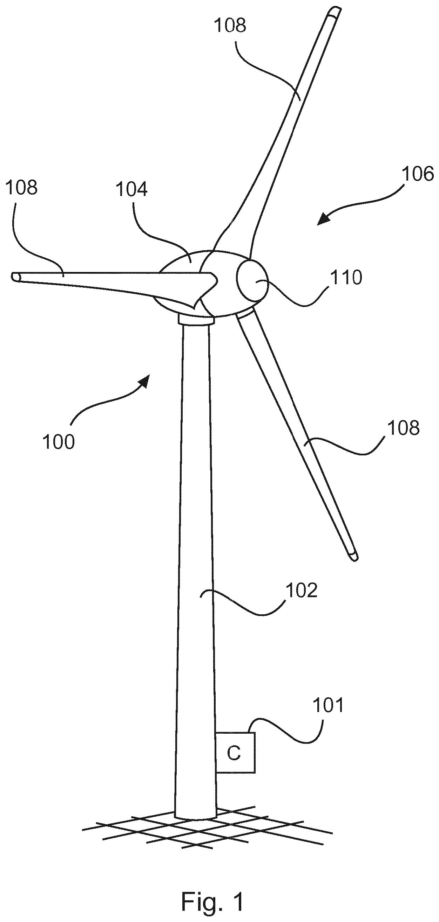

Figure 1 shows a wind turbine 100 comprising a tower 102 and a nacelle 104. A rotor 106 having three rotor blades 108 and a spinner 110 being arranged on the nacelle 104. The rotor 106 is set in rotation motion by the wind during operation and drives a generator in the nacelle 104 as a result.

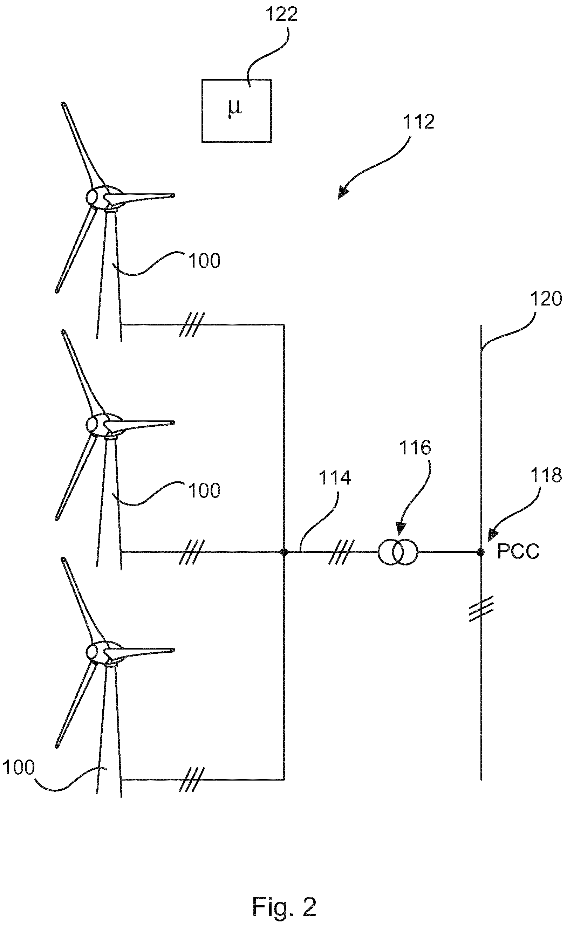

Figure 1 also illustrates a communication interface 101, which may be used to communicate with other wind turbines 100 and/or to communicate with a central control unit, as is illustrated as a central control unit 122 in figure 2. Any transmission lines for communication, if the communication is not running wirelessly, are not shown.

Figure 2 shows a wind farm 112 having, just as an example, three wind turbines 100, which may be similar or different. Thus, said three wind turbines 100 may represent basically any number of wind turbines of a wind farm 112. Each wind turbine 100 provides their power, in particular the generated current using an electrical farm network 114. Thereby the generated currents or generated power of each wind turbine 100 respectively will be sum up. Often there is a transformer 116 transforming the voltage of the wind farm to a higher level, in order to feed in the overall current or overall power respectively at the feed in point 118 into the electrical supply grid 120. The feed in point 118 may also be depicted as point of common coupling (PCC).

The wind farm 112 also comprises a central control unit 122 in order to control the wind turbines 100. The central control unit 122 is adapted to communicate with each wind turbine 100 even though any transmission lines are not shown. However, such communication may use such transmission lines or may operate wirelessly.

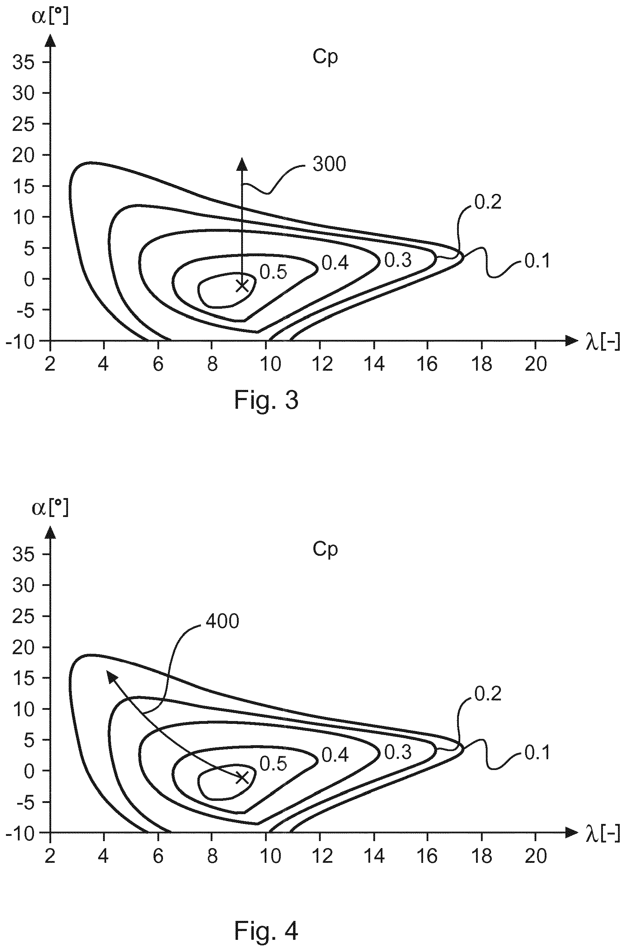

Figure 3 shows a diagram having the tip speed ratio *λ* at the axis of abscissae and the pitch angle α at the axis of ordinates. In this diagram any line refers to a power coefficient Cp of equal value. Accordingly, each line illustrates all pairs or tuples of tip speed ratio *λ* and pitch angle α having the same power coefficient Cp.

In figure 3 an arrow 300 indicates an increase of the pitch angle α for curtailment of the operation of the wind turbine. Accordingly, the pitch angle is increased, but the rotational speed and thus the tip speed ratio *λ* is not adapted. Accordingly, the power coefficient Cp is reduced in a way, which is not quite optimal.

In order to improve that, a solution is proposed as illustrated in figure 4. Figure 4 also shows a diagram with the tip speed ratio *λ* at the axis of abscissa and the pitch angle α at the axis of ordinate. However, the pitch angle is not just reduced in a way as illustrated by arrow 300 in figure 3 but the tip speed ratio *λ* is also adapted.

Preferably, the pitch angle α and the speed ratio *λ* are adapted such that the power coefficient Cp is reduced as little as possible. In order to find such minimized reduction, the change of each pair of tip speed ratio *λ* and pitch angle α shall follow the gradient, i.e. the largest incline of the power coefficient Cp. All pairs of pitch angles α and speed ratios *λ* which fulfill that criterion form a trajectory crossing the lines of identical power coefficient Cp in a perpendicular way. That is illustrated by the arrow 400 in figure 4. The arrow 400 points in the direction of increasing pitch angle α and thus shows a path for optimal change of pitch angle α and tip speed ratio *λ* such that the power coefficient is changed (reduced) as little as possible. Due to graphical deformations the figure 4 might not exactly show such perpendicular crossing. This way an operating point can be found not only having a decreased thrust, but also providing fairly high power generation for such reduced thrust.

Such optimal or at least improved change of the pitch angle *α* can be realized by also changing the speed control when the pitch angle α is changed. Such speed control can be designed such that the speed ratio *λ* changes as illustrated in figure 4 and as explained accordingly. I.e. the speed ratio *λ* depends on the wind speed and the rotational speed and thus for a given wind speed the speed control can set the rotational speed and thus the tip speed and accordingly the speed ratio *λ*.

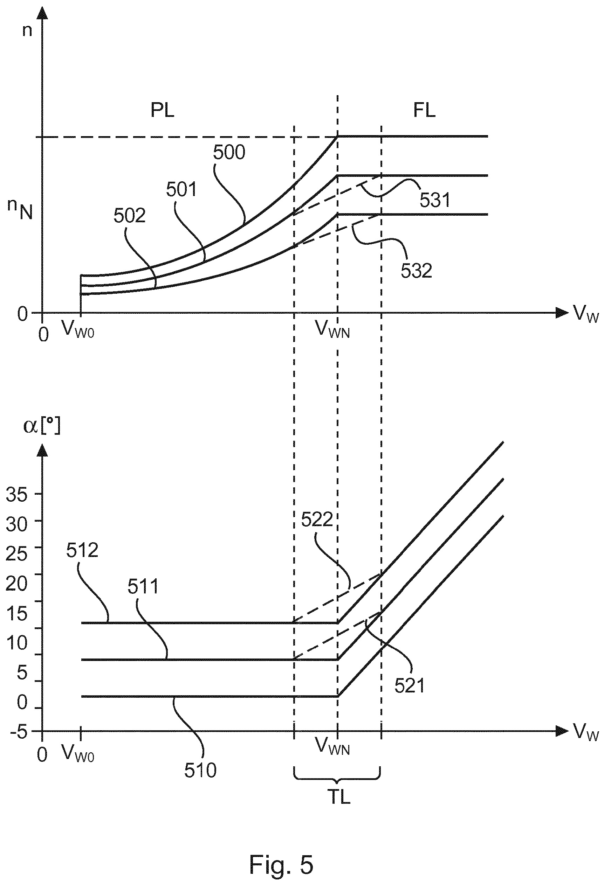

Based on that rotor speed curves can be derived as shown in the upper diagram of figure 5. Accordingly said upper diagram of figure 5 shows a normal rotor speed curve 500 corresponding to a normal speed control and a first and second curtailment rotor speed curve 501 and 502 corresponding to a curtailment speed control. These rotor speed curves 500, 501 and 502 are designed as the rotational speed n depending on the wind speed V_{W}. Said diagram also distinguishes between a partial load situation PL and a full load situation FL. The partial load situation is directed to the situation when the wind speed V_{W} is below nominal wind speed V_{WN}. The operation of the wind turbines starts at a minimum wind speed V_{W0} which is necessary in order to start the wind turbine.

The lower diagram of figure 5 shows a curve for a normal pitch angle 510 and a first and second curve for a curtailment pitch angle 511 and 512. The normal pitch angle 510 corresponds to the normal rotor speed curve 500 and the first and second curtailment pitch angles 511 and 512 correspond to the first and second curtailment rotor speed curve 501 and 502 respectively.

Accordingly, it is suggested to operate the wind turbine according to the curve for a normal pitch angle 510 using the normal rotor speed curve 500. According to the example shown the normal pitch angle 510 has the constant value of 0 and that can correspond to the starting point X shown in figure 4. However, in other embodiments the normal pitch angle may also have other values, such as 3° to give one example. It might also be possible that the normal pitch angle is not constant for the whole partial load situation.

However, in order to reduce rotor trust the normal pitch angle 510 may be changed to the first curtailment pitch angle 511. Accordingly, the pitch angle α in the diagram of figure 5 is increased by 5° but such high increase is only picked for illustrative reasons and instead such changes are more likely to show values of 0.5° for each change and thus for each 0.5° change of the pitch angle a curtailment rotor speed curve may be assigned. Concurrently with changing the pitch angle it is thus suggested to also change to a corresponding speed control and that may be by changing to a corresponding curtailment rotor speed curve. Accordingly when changing to the first curtailment pitch angle 511 the rotor speed curve shall also be changed to the first curtailment speed control and thus to the curtailment rotor speed curve 501. If it turns out that the rotor thrust shall be reduced even further the pitch angle may be changed to the second curtailment pitch angle 512 and the rotor speed curve may also be changed to the second curtailment rotor speed curve 502. Further changes to higher pitch angles may be possible as well as smaller changes. For smaller changes of the pitch angle there may also be curtailment rotor speed curves between the first and second curtailment rotor speed curves. Alternatively such rotor speed curves or single values thereof may be interpolated.

Said first and second curtailment rotor speed curves 501 and 502 may each be derived as explained with respect to figure 4. Accordingly a diagram as shown in figure 4 may be generated and used for different wind speeds and for such different wind speeds a tip speed ratio *λ* may be selected each as shown in the diagram of figure 4. To explain this based on the two examples of figure 5, i.e. for a curtailment pitch angel of 5° and a curtailment pitch angle of 10° the process works as follows.

In a similar way all tip speed ratios *λ* for the particular pitch angle of 10° may be used to calculate the second curtailment rotor speed curve 502. Of course, the rotor speed n can easily be calculated from the tip speed ratio α and the wind speed V_{W} according to the formula n = *λ · V_{W}*/2*πr,* with r being the radius of the rotor.

Figure 5 also shows the full load situation FL. Accordingly, the normal rotor speed curve 500 reaches the nominal rotor speed n_{N}, shown as a horizontal line. The first and second curtailment rotor speed curves 501 and 502 may also switch over to a horizontal line, i.e. to a constant value, which may be below nominal rotor speed n_{N}.

The curves for the pitch angles 510, 511 and 512 will all increase with further increasing wind speed V_{W}.

However, according to one embodiment it is suggested to increase the curtailment pitch angle before the wind speed V_{W} reaches the nominal wind speed V_{WN}. This is indicated by the dashed lines 521 and 522 respectively. This way it is possible to avoid highest loads in particular at nominal wind speed V_{WN}. For such amended first and second curve for curtailment pitch angels 521 and 522 respectively it is suggested to also amend the corresponding first and second curtailment rotor speed curve 501 and 502. This is indicated by the dashed lines 531 and 532 in the above diagram of figure 5.

Such amendment of the first and second curtailment rotor speed curves 501 and 502 depending on the chosen pitch angle can also be done by using the concept explained with respect to the diagram of figure 4. Such increase of the curtailment pitch angle before the rated wind speed V_{WN} is reached, is suggested for a transient situation TS. Such transient situation TS may start at a wind speed below rated wind speed, preferably in the range of 1% to 10% below rated wind speed and may end at a wind speed at or above rated wind speed, preferably in the range of 1% to 10% above rated wind speed.

It is also to be noted that figure 5 shows in the upper diagram just one possibility of a rotor speed curve, i.e. the rotor speed being given as a curve depending on the wind speed. Other possibilities are to give a rotor speed curve depending on the power to be produced. And a further possibility is to have a rotor speed curve depending on the generator torque to be set. These are thus possibilities to execute a speed control.

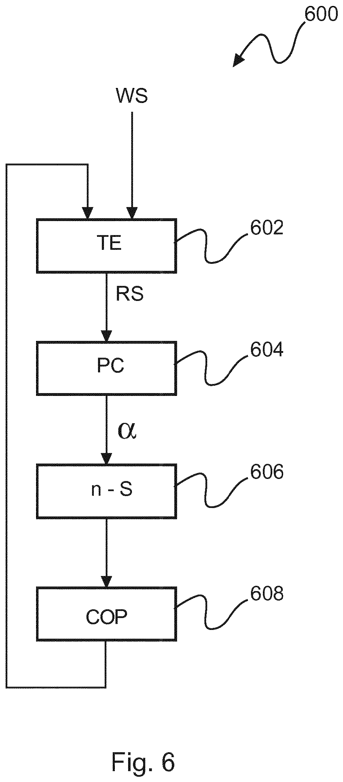

Figure 6 illustrates in a simple flow chart 600 how to proceed if a rotor thrust needs to be reduced. A starting point may be a wake signal WS indicating a so-called wake situation. A wake situation is a situation in which a first wind turbine, which could be the upper most wind turbine 100 according to figure 2, is arranged in front of a second wind turbine, which may be the wind turbine 100 shown in the middle of figure 2. Accordingly, such second wind turbine is situated in lee of the first wind turbine, whereas the first wind turbine significantly influences the wind that reaches the second wind turbine. Accordingly, such wake signal WS may be generated by the second wind turbine or it may also be generated by a central control unit as the central control unit 122 shown in figure 2.

Such wake signal WS is inputted in a thrust evaluation block 602. This thrust evaluation block 602 will then start to generate a reduction signal RS. This reduction signal will be used in the pitch angle change block 604 and this pitch angle change block 604 will thus increase the pitch angle *α* from the normal pitch angle to a curtailment pitch angle. Such pitch angle α is then used in the rotor speed selection block 606. In the rotor speed selection block 606 a curtailment rotor speed curve will be selected according to the determined curtailment pitch angle. This may be done by selecting a corresponding curtailment rotor speed curve. If there is no curtailment rotor speed curve corresponding to the selected curtailment pitch angle, an interpolation or extrapolation may be performed based on two stored curtailment rotor speed curves.

Each curtailment rotor speed curve used in the rotor speed selection block 606 may be stored in a corresponding data storage and being assigned to a corresponding curtailment pitch angle. Each curtailment rotor speed curve may be derived as explained with respect to figure 4 by looking for optimal operational points using the trajectory 400.

As a result there is a new curtailment pitch angle and a new curtailment speed curve selected and the operational change block 608 will change the operation of the wind turbine accordingly

However, according to the flow chart 600 it is suggested that after the operation of the wind turbine has been changed according to the operational change block 608 the thrust evaluation block 602 may determine whether the reduction of the thrust is enough or if further reduction is necessary and accordingly the reduction signal RS may be changed or not.

Accordingly, the invention provides a solution in order to reduce the rotor thrust of a first wind turbine which may in particular lead to a reduced turbulence for a second wind turbine in lee of said first wind turbine. This way it might be avoided that such second wind turbine in lee needs to be switched off in order to reduce its load caused by such turbulences.

However, the suggestion is not just to increase the pitch angle and let the wind turbine continue its operation using the normal and only rotor speed curve, but to propose an optimized operational point. Such optimized operational point can be formed by a general strategy for determining it and accordingly the whole operation may change to a curtailed but besides that optimized operation.

It is also to be noted, that according to prior art it is known to just change or set a minimum pitch angle. Accordingly, that means that in case the pitch angle in the normal operation without thrust reduction was smaller than the minimum pitch angle, the pitch angle will then be increased to reach the minimum pitch angle. Based on that and according to the invention it is also possible and will be suggested according to one embodiment, to provide a minimum pitch angle. This will lead to changing the normal pitch angle to a curtailment pitch angle which is having at least the value of the minimum pitch angle. However, according to the invention in addition to that an optimal operational point is suggested, in particular as explained with respect to the diagram of figure 4. Based on that an adapted rotor speed curve may be chosen.

## Claims

1. Method for operating a wind turbine (100), the wind turbine (100) comprising
- a rotor (106) operable with variable rotor speed, and
- the rotor (106) having rotor blades (108) with adjustable pitch angles, wherein
- the wind turbine (100) produces electrical power from wind,
- the wind causes a rotor thrust acting on the rotor (106) depending on the rotor speed (n) and depending on the pitch angle (*α*),
- in a partial load situation, when the wind is below rated wind speed (V_{WN}), the wind turbine (100) is controlled by means of a speed control for controlling the rotor speed (n) depending on a given pitch angle (*α*), wherein
- in a normal operational mode when the operation of the wind turbine (100) is not in a curtailment mode, a normal speed control is used controlling the rotor speed (n) in combination with an optimal pitch angle (*α*), and
- in a curtailment mode when the rotor thrust is to be limited,
a curtailment speed control, different to the normal speed control, in combination with a curtailment pitch angle, different to the optimal pitch angle, is used in order to reduce the rotor thrust,
wherein the curtailment speed control is designed by applying an optimization criterion, wherein according to the optimization criterion in
a pitch angle curve showing the pitch angle depending on the tip-speed-ratio (*λ*) and depending on the power coefficient (Cp), wherein
starting from a situation without reduced rotor thrust the pitch angle will be increased to a curtailment pitch angle in order to reduce the rotor thrust, wherein the tip-speed-ratio is set based on the curtailment pitch angle in order to find the maximal power.

2. Method according to claim 1, wherein
- the speed control controls the rotor speed (n) by adjusting
- the produced electrical power (P) and/or
- a generator torque (m) and/or
- the rotor speed control is provided by a rotor speed - generator torque- curve.

3. Method according to claims 1 or 2, wherein
- the curtailment pitch angle defines a lower limit pitch angle being larger than the optimal pitch angle and
- the method is adapted to further increase the pitch angle (*α*) above the lower limit pitch angle depending on an operating point of the wind turbine, and wherein in particular
- a speed control is adapted in accordance with the increased pitch angle (*α*).

4. Method according to any of the preceding claims, wherein
the curtailment speed control is designed such that
- the curtailment pitch angle is set to a value above the optimal pitch angle and
- the curtailment speed control controls the rotor speed such that the produced electrical power is maximized..

5. Method according to any of the preceding claims, wherein
- for changing operation of the wind turbine (100) from the normal operational mode to the curtailment mode
- the pitch angle (*α*) is changed stepwise from the optimal pitch angle to the curtailment pitch angle using intermediate curtailment angles for each step, and
- at each angle step the wind turbine (100) is operated using an intermediate curtailment speed control corresponding to the intermediate curtailment angle, wherein
- the stepwise change uses a given angle step, in particular having a size of 0,5° to 5°, preferably having a size of 1° to 2°, wherein in particular 3 to 10 seconds are used to change for each degree.

6. Method according to any of the preceding claims, wherein
the operation of the rotor (106) is **characterized by** a power coefficient (Cp) and wherein the curtailment speed control is designed such that the power coefficient (Cp) is maximized.

7. Method according to any of the preceding claims, wherein
the curtailment speed control is designed such that
depending on the curtailment pitch angle a tip-speed-ratio (*λ*) is set such that the electrical power i(P) s maximized, and/or such that the power coefficient (Cp) is maximized.

8. Method according to any of the preceding claims, wherein
in a full load situation, when the wind is at or above rated wind speed
- operating the wind turbine (100) in the normal operational mode with rated rotor speed, with a rated generator torque and with rated power, and
- operating the wind turbine (100) in the curtailment operational mode with a curtailment rotor speed being below the rated rotor speed, and with increased generator torque being above rated generator torque, and/or with rated power.

9. Method according to any of the preceding claims, wherein
- a set of curtailment speed controls is provided, each curtailment speed control comprises a minimum pitch angle, and
- for operating the wind turbine one curtailment speed control of the set of curtailment speed controls is selected depending on the amount of rotor thrust to be limited.

10. Method according to any of the preceding claims, wherein
in a transient operational situation where the operation shifts from partial load situation to a full load situation the curtailment pitch angle increases with increasing wind speed, in particular the pitch angle increases depending on an increase of the produced electrical power, in particular with a predefined pitch angle to power slope.

11. Method according to any of the preceding claims, wherein
the curtailment operation is chosen depending of at least one of the following criteria or information of the list comprising:
- an azimuth position of the wind turbine (100),
- a measured or determined wind speed (V_{w}),
- a measured or determined intensity of gustiness or a turbulence intensity,
- a measured or determined wake-effect, according to which the wind turbine (100) influences a wind field of a further wind (100) turbine arranged in lee of the wind turbine (100),
- a signal received from a further wind turbine (100) arranged in lee of the wind turbine (100),
- a signal received from a central farm control unit (122) of a wind farm (112), if the wind turbine (100) is part of the wind farm (112) and
- a requirement for reducing noise emission.

12. Wind turbine (100) comprising
- a rotor (106) operable with variable rotor speed (n), and
- the rotor (106) having rotor blades (108) with adjustable pitch angles (*α*),
- a generator for producing electrical power (P) from wind, wherein
- the wind causes a rotor thrust acting on the rotor (106) depending on the rotor speed (n) and depending on the pitch angle (*α*),
- a turbine control adapted to operate the wind turbine (100)
- in a partial load situation, when the wind is below rated wind speed (V_{WN}), wherein the wind turbine (100) is controlled by means of a speed control for controlling the rotor speed (n) depending on a given pitch angle (*α*), wherein
- in a normal operational mode when the operation of the wind turbine (100) is not in a curtailment mode, a normal speed control is used controlling the rotor speed (n) in combination with an optimal pitch angle, and
- in a curtailment mode when the rotor thrust is to be limited,
a curtailment speed control, different to the normal speed control, in combination with a curtailment pitch angle, different to the optimal pitch angle, is used in order to reduce the rotor thrust,
wherein the curtailment speed control is designed by applying an optimization criterion, wherein according to the optimization criterion in
a pitch angle curve showing the pitch angle depending on the tip-speed-ratio (*λ*) and depending on the power coefficient (Cp), wherein
starting from a situation without reduced rotor thrust the pitch angle will be increased to a curtailment pitch angle in order to reduce the rotor thrust, wherein the tip-speed-ratio is set based on the curtailment pitch angle in order to find the maximal power.

13. Wind turbine (100) according to claim 12, wherein the wind turbine (100), in particular the turbine control is adapted to operate the wind turbine (100) according to a method as claimed in any of claims 1 to 11.

14. Arrangement of wind turbines (100) comprising
- a first wind turbine (100) according to claims 12 or 13,
- a second wind turbine (100) arranged in proximity of the first wind turbine (100), and
- communication means connecting the first and the second wind turbine (100) to exchange information to be used for operating at least the first wind turbine (100).

15. Wind farm (112) comprising
- a plurality of wind turbines (100) with at least one wind turbine (100) according to claims 12 or 13 and optionally
- a central control unit (122) in order to control the wind turbines (100).

## Patentansprüche

1. Verfahren zum Betreiben einer Windenergieanlage (100), wobei die Windenergieanlage (100) umfasst
- einen Rotor (106), der mit variabler Rotordrehzahl betrieben werden kann, und
- wobei der Rotor (106) Rotorblätter (108) mit einstellbaren Pitchwinkeln aufweist,
wobei
- die Windenergieanlage (100) aus Wind elektrische Energie erzeugt,
- der Wind einen Rotorschub verursacht, der in Abhängigkeit von der Rotordrehzahl (n) und in Abhängigkeit vom Pitchwinkel (*α* ) auf den Rotor (106) wirkt,
- in einer Teillast-Situation, wenn der Wind unterhalb der Nennwindgeschwindigkeit (V_{WN} ) liegt, wird die Windenergieanlage (100) mittels einer Drehzahlregelung zur Steuerung der Rotordrehzahl (n) in Abhängigkeit von einem vorgegebenen Pitchwinkel (*α* ) geregelt, wobei
- in einem normalen Betriebsmodus, wenn der Betrieb der Windenergieanlage (100) nicht in einem Drosselungsmodus ist, eine normale Drehzahlregelung verwendet wird, die die Rotordrehzahl (n) in Kombination mit einem optimalen Pitchwinkel (*α* ) regelt, und
- in einem Drosselungsmodus, wenn der Rotorschub begrenzt werden soll,
eine von der normalen Drehzahlregelung abweichende Drosselungsdrehzahlregelung in Kombination mit einem vom optimalen Pitchwinkel abweichenden Drosselungspitchwinkel verwendet wird, um den Rotorschub zu reduzieren,
wobei die Drosselungsdrehzahlregelung durch Anwendung eines Optimierungskriteriums entworfen ist, wobei gemäß dem Optimierungskriterium in einer Pitchwinkelkurve, die den Pitchwinkel in Abhängigkeit von der Schnelllaufzahl (*λ* ) und in Abhängigkeit vom Leistungskoeffizienten (Cp) zeigt,
ausgehend von einer Situation ohne reduzierten Rotorschub der Pitchwinkel auf einen Drosselungspitchwinkel erhöht wird, um den Rotorschub zu reduzieren, wobei die Schnelllaufzahl auf der Grundlage des Drosselungspitchwinkels eingestellt wird, um die maximale Leistung zu finden.

2. Verfahren nach Anspruch 1, wobei
- die Drehzahlregelung die Rotordrehzahl (n) regelt, durch Einstellen
- der erzeugten elektrischen Leistung (P) und/oder
- eines Generator-Drehmoments (m) und/oder
- die Rotordrehzahlregelung über eine Rotordrehzahl-Generatormoment-Kurve erfolgt.

3. Verfahren nach Anspruch 1 oder 2, wobei
- der Drosselungspitchwinkel einen unteren Grenzpitchwinkel definiert, der größer ist als der optimale Pitchwinkel, und
- das Verfahren so ausgelegt ist, dass es den Pitchwinkel (*α* ) in Abhängigkeit von einem Betriebspunkt der Windenergieanlage über den unteren Grenzwert des Pitchwinkels hinaus weiter erhöht, und wobei insbesondere
- eine Drehzahlregelung entsprechend dem erhöhten Pitchwinkel (*α* ) angepasst wird.

4. Verfahren nach einem der vorstehenden Ansprüche, wobei
die Drosselungsdrehzahlregelung so ausgelegt ist, dass
- der Drosselungspitchwinkel auf einen Wert oberhalb des optimalen Pitchwinkels eingestellt wird und
- die Drosselungsdrehzahlregelung die Rotordrehzahl so regelt, dass die erzeugte elektrische Leistung maximiert wird.

5. Verfahren nach einem der vorstehenden Ansprüche, wobei
- zum Umschalten des Betriebs der Windenergieanlage (100) vom normalen Betriebsmodus in den Drosselungsmodus
- der Pitchwinkel (*α* ) schrittweise vom optimalen Pitchwinkel zum Drosselungspitchwinkel unter Verwendung von Zwischen-Drosselungswinkeln für jeden Schritt geändert wird, und
- bei jedem Winkelschritt die Windenergieanlage (100) unter Verwendung einer dem Zwischen-Drosselungswinkel entsprechenden Zwischen-Drosselungsdrehzahlregelung betrieben wird, wobei
- die schrittweise Änderung in einem vorgegebenen Winkelschritt erfolgt, insbesondere mit einer Größe von 0,5° bis 5°, vorzugsweise mit einer Größe von 1° bis 2°, wobei insbesondere 3 bis 10 Sekunden für die Änderung pro Grad verwendet werden.

6. Verfahren nach einem der vorstehenden Ansprüche, wobei
der Betrieb des Rotors (106) durch einen Leistungskoeffizienten (Cp) gekennzeichnet ist und wobei die Drosselungsdrehzahlregelung so ausgelegt ist, dass der Leistungskoeffizient (Cp) maximiert wird.

7. Verfahren nach einem der vorstehenden Ansprüche, wobei
die Drosselungsdrehzahlregelung so ausgelegt ist, dass
in Abhängigkeit vom Drosselungspitchwinkel eine Schnelllaufzahl (*λ* ) so eingestellt wird, dass die elektrische Leistung i(P) maximiert wird und/oder dass der Leistungskoeffizient (Cp) maximiert wird.

8. Verfahren nach einem der vorstehenden Ansprüche, wobei
in einer Volllastsituation, wenn die Windgeschwindigkeit bei oder über der Nennwindgeschwindigkeit liegt
- die Windenergieanlage (100) im normalen Betriebsmodus mit Nennrotordrehzahl, mit einem Nenngeneratormoment und mit Nennleistung betrieben wird, und
- die Windenergieanlage (100) im Drosselungsbetriebsmodus mit einer Drosselungsrotordrehzahl unterhalb der Nenndrehzahl und mit einem erhöhten Generatormoment oberhalb des Nenngeneratormoments und/oder mit Nennleistung betrieben wird.

9. Verfahren nach einem der vorstehenden Ansprüche, wobei
- eine Reihe von Drosselungsdrehzahlregelungen vorgesehen ist, wobei jede Drosselungsdrehzahlregelung einen minimalen Pitchwinkel umfasst, und
- zum Betrieb der Windenergieanlage eine Drosselungsdrehzahlregelung aus dem Satz von Drosselungsdrehzahlregelungen in Abhängigkeit von der zu begrenzenden Rotorschubkraft ausgewählt wird.

10. Verfahren nach einem der vorstehenden Ansprüche, wobei
in einer vorübergehenden Betriebssituation, in der der Betrieb von einer Teillast- zu einer Volllastsituation wechselt, der Drosselungspitchwinkel mit zunehmender Windgeschwindigkeit zunimmt, insbesondere der Pitchwinkel in Abhängigkeit von einer Zunahme der erzeugten elektrischen Leistung zunimmt, insbesondere mit einer vordefinierten Pitchwinkel-Leistung-Steigung.

11. Verfahren nach einem der vorstehenden Ansprüche, wobei
der Drosselungsbetrieb ausgewählt wird in Abhängigkeit von mindestens einem der folgenden Kriterien oder Informationen aus der Liste umfassend:
- eine Azimutposition der Windenergieanlage (100),
- eine gemessene oder bestimmte Windgeschwindigkeit (V_{w} ),
- eine gemessene oder ermittelte Intensität der Böigkeit oder eine Turbulenzintensität,
- einen gemessenen oder ermittelten Nachlaufeffekt, gemäß dem die Windenergieanlage (100) ein Windfeld einer weiteren Windenergieanlage (100) beeinflusst, die im Windschatten der Windenergieanlage (100) angeordnet ist,
- ein von einer weiteren Windenergieanlage (100), die im Windschatten der Windenergieanlage (100) angeordnet ist, empfangenes Signal,
- ein von einer zentralen Parksteuereinheit (122) eines Windparks (112) empfangenes Signal, wenn die Windenergieanlage (100) Teil des Windparks (112) ist, und
- eine Anforderung zur Reduzierung der Geräuschemission.

12. Windenergieanlage (100) mit
- einem Rotor (106), der mit variabler Rotordrehzahl (n) betrieben werden kann, und
- wobei der Rotor (106) Rotorblätter (108) mit einstellbaren Pitchwinkeln (*α* ) aufweist,
- einem Generator zum Erzeugen von elektrischer Energie (P) aus Wind, wobei
- der Wind einen Rotorschub verursacht, der in Abhängigkeit von der Rotordrehzahl (n) und in Abhängigkeit vom Pitchwinkel (*α* ) auf den Rotor (106) wirkt,
- einer Windenergieanlagensteuerung, die zum Betreiben der Windenergieanlage (100) eingerichtet ist
- in einer Teillast-Situation, wenn der Wind unterhalb der Nennwindgeschwindigkeit (V_{WN}) liegt, wobei die Windenergieanlage (100) mittels einer Drehzahlregelung zur Steuerung der Rotordrehzahl (n) in Abhängigkeit von einem vorgegebenen Pitchwinkel (*α* ) geregelt wird, wobei
- in einem normalen Betriebsmodus, wenn der Betrieb der Windenergieanlage (100) nicht in einem Drosselungsmodus erfolgt, eine normale Drehzahlregelung verwendet wird, die die Rotordrehzahl (n) in Kombination mit einem optimalen Pitchwinkel regelt, und
- in einem Drosselungsmodus, wenn der Rotorschub begrenzt werden soll,
eine von der normalen Drehzahlregelung abweichende Drosselungsdrehzahlregelung in Kombination mit einem vom optimalen Pitchwinkel abweichenden Drosselungspitchwinkel verwendet wird, um den Rotorschub zu reduzieren,
wobei die Drosselungsdrehzahlregelung durch Anwendung eines Optimierungskriteriums entworfen ist, wobei gemäß dem Optimierungskriterium in
einer Pitchwinkelkurve, die den Pitchwinkel in Abhängigkeit von der Schnelllaufzahl (*λ* ) und in Abhängigkeit vom Leistungskoeffizienten (Cp) zeigt,
ausgehend von einer Situation ohne reduzierten Rotorschub der Pitchwinkel auf einen Drosselungspitchwinkel erhöht wird, um den Rotorschub zu reduzieren, wobei die Schnelllaufzahl auf der Grundlage des Drosselungspitchwinkels eingestellt wird, um die maximale Leistung zu finden.

13. Windenergieanlage (100) nach Anspruch 12, wobei die Windenergieanlage (100), insbesondere die Windenergieanlagensteuerung, so ausgelegt ist, dass sie die Windenergieanlage (100) gemäß einem Verfahren nach einem der Ansprüche 1 bis 11 betreibt.

14. Anordnung von Windenergieanlagen (100), umfassend
- eine erste Windenergieanlage (100) gemäß Anspruch 12 oder 13,
- eine zweite Windenergieanlage (100), die in der Nähe der ersten Windenergieanlage (100) angeordnet ist, und
- Kommunikationsmittel, die die erste und die zweite Windenergieanlage (100) verbinden, um Informationen auszutauschen, die zum Betrieb zumindest der ersten Windenergieanlage (100) verwendet werden.

15. Windpark (112) bestehend aus
- mehreren Windenergieanlagen (100) mit mindestens einer Windenergieanlage (100) gemäß Anspruch 12 oder 13 und optional
- eine zentrale Steuereinheit (122) zur Steuerung der Windenergieanlagen (100).

## Revendications

1. Procédé de fonctionnement d'une éolienne (100), l'éolienne (100) comprenant
- un rotor (106) pouvant fonctionner à une vitesse de rotor variable, et
- le rotor (106) présentant des pales (108) de rotor à angles de pas réglables, dans lequel
- l'éolienne (100) produit une puissance électrique à partir du vent,
- le vent génère une poussée (106) de rotor qui dépend de la vitesse (n) du rotor et de l'angle de pas (α),
- dans une situation de charge partielle, lorsque la vitesse du vent est inférieure à la vitesse de vent nominale (V_{WN}), l'éolienne (100) est commandée au moyen d'une commande de vitesse pour commander la vitesse (n) du rotor en fonction d'un angle de pas (*α*) donné, dans lequel
- dans un mode de fonctionnement normal, lorsque l'éolienne (100) n'est pas dans un mode de limitation, une commande de vitesse normale est utilisée pour commander la vitesse (n) de rotor en combinaison avec un angle de pas (α) optimal, et
- dans un mode de limitation lorsque la poussée de rotor doit être restreinte,
une commande de vitesse de limitation, différente de la commande de vitesse normale, combinée à un angle de pas de limitation, différent de l'angle de pas optimal, est utilisée afin de réduire la poussée de rotor,
dans lequel la commande de vitesse de limitation est conçue en appliquant un critère d'optimisation, dans lequel selon le critère d'optimisation une courbe d'angle de pas représente l'angle de pas en fonction du rapport de vitesse de pointe (*λ*) et du coefficient de puissance (Cp), dans lequel
en partant d'une situation sans réduction de la poussée de rotor l'angle ne pas va être augmenté jusqu'à un angle de pas de limitation afin de réduire la poussée de rotor, le rapport de vitesse de pointe étant défini sur la base de l'angle de pas de limitation afin de trouver la puissance maximale.

2. Procédé selon la revendication 1, dans lequel
- la commande de vitesse commande la vitesse (n) de rotor en réglant
- la puissance électrique (P) produite et/ou
- un couple générateur (m) et/ou
- la commande de vitesse de rotor est fournie par une courbe vitesse de rotor - couple générateur.

3. Procédé selon les revendications 1 ou 2, dans lequel
- l'angle de pas de limitation définit un angle de pas restreint inférieur qui est supérieur à l'angle de pas optimal et
- le procédé est conçu pour augmenter davantage l'angle de pas (α) au-dessus de l'angle de pas restreint inférieur en fonction d'un point de fonctionnement de l'éolienne, et dans lequel en particulier
- une commande de vitesse est adaptée en fonction de l'angle de pas (α) augmenté.

4. Procédé selon l'une quelconque des revendications précédentes, dans lequel
la commande de vitesse de limitation est conçue de sorte que
- l'angle de pas de limitation est défini à une valeur supérieure à l'angle de pas optimal et
- la commande de vitesse de limitation commande la vitesse de rotor de sorte que la puissance électrique produite soit maximisée.

5. Procédé selon l'une quelconque des revendications précédentes, dans lequel
- pour modifier le fonctionnement de l'éolienne (100) du mode de fonctionnement normal au mode de limitation
- l'angle de pas (*α*) est modifié progressivement de l'angle de pas optimal à l'angle de pas de limitation en utilisant des angles de limitation intermédiaires pour chaque étape, et
- à chaque étape d'angle l'éolienne (100) est exploitée à l'aide d'une commande de vitesse de limitation intermédiaire correspondant à l'angle de limitation intermédiaire, dans lequel
- le changement progressif utilise une étape d'angle donnée, en particulier présentant une taille de 0,5° à 5°, de préférence présentant une taille de 1° à 2°, dans lequel en particulier 3 à 10 secondes sont nécessaires pour modifier chaque degré.

6. Procédé selon l'une quelconque des revendications précédentes, dans lequel
le fonctionnement du rotor (106) est **caractérisé par** un coefficient de puissance (Cp) et la commande de vitesse de limitation est conçue de manière à maximiser le coefficient de puissance (Cp).

7. Procédé selon l'une quelconque des revendications précédentes, dans lequel
la commande de vitesse de limitation est conçue de sorte que
en fonction de l'angle de pas de limitation un rapport de vitesse de pointe (*λ*) est défini de manière à maximiser la puissance électrique i(P) et/ou à maximiser le coefficient de puissance (Cp).

8. Procédé selon l'une quelconque des revendications précédentes, dans lequel
dans une situation de charge maximale, lorsque la vitesse du vent est égale ou supérieure à la vitesse de vent nominale
- on fait fonctionner l'éolienne (100) dans le mode de fonctionnement normal avec une vitesse de rotor nominale, un couple générateur nominal et une puissance nominale, et
- on fait fonctionner l'éolienne (100) dans le mode opérationnel de limitation avec une vitesse de rotor de limitation inférieure à la vitesse de vent nominale, et un couple générateur augmenté supérieur au couple générateur nominal, et/ou avec une puissance nominale.

9. Procédé selon l'une quelconque des revendications précédentes, dans lequel
- un ensemble de commandes de vitesse de limitation est fourni, chaque commande de vitesse de limitation comprend un angle de pas minimal, et
- pour faire fonctionner l'éolienne, une commande de vitesse de limitation de l'ensemble de commandes de vitesse de limitation est sélectionnée en fonction de la quantité de poussée de rotor devant être restreinte.

10. Procédé selon l'une quelconque des revendications précédentes, dans lequel
dans une situation opérationnelle transitoire où l'opération passe d'une situation de charge partielle à une situation de charge complète, l'angle de pas de limitation augmente avec la vitesse du vent, en particulier l'angle de pas augmente en fonction de l'augmentation de la puissance électrique produite, en particulier avec un angle de pas prédéfini par rapport à la pente de puissance.

11. Procédé selon l'une quelconque des revendications précédentes, dans lequel
l'opération de limitation est choisie en fonction d'au moins un des critères ou informations suivants de la liste comprenant :
- une position d'azimut de l'éolienne (100),
- une vitesse de vent mesurée ou déterminée (V_{w}),
- une intensité de rafale ou une intensité de turbulence mesurée ou déterminée,
- un effet de sillage mesuré ou déterminé, selon lequel l'éolienne (100) influence un champ de vent d'une autre éolienne (100) située sous le vent de l'éolienne (100),
- un signal reçu d'une autre éolienne (100) située sous le vent de l'éolienne (100),
- un signal reçu d'une unité de commande centrale (122) d'un parc éolien (112), si l'éolienne (100) fait partie du parc éolien (112) et
- une exigence de réduction des émissions sonores.

12. Éolienne (100) comprenant
- un rotor (106) pouvant fonctionner à vitesse de rotor (n) variable, et
- le rotor (106) présentant des pales (108) de rotor à angles de pas (α) réglables,
- un générateur pour produire une puissance électrique (P) à partir du vent, dans laquelle
- le vent génère une poussée (106) de rotor qui dépend de la vitesse (n) du rotor et de l'angle de pas (α),
- une commande de turbine conçue pour faire fonctionner l'éolienne (100)
- dans une situation de charge partielle, lorsque la vitesse du vent est inférieure à la vitesse de vent nominale (V_{WN}), l'éolienne (100) est commandée au moyen d'une commande de vitesse pour commander la vitesse de rotor (n) en fonction d'un angle de pas (α) donné, dans laquelle
- dans un mode de fonctionnement normal lorsque le fonctionnement de l'éolienne (100) n'est pas dans un mode de limitation, une commande de vitesse normale est utilisée pour commander la vitesse (n) de rotor en combinaison avec un angle de pas optimal, et
- dans un mode de limitation lorsque la poussée de rotor doit être restreinte,
une commande de vitesse de limitation, différente de la commande de vitesse normale, combinée à un angle de pas de limitation, différent de l'angle de pas optimal, est utilisée afin de réduire la poussée de rotor,
dans laquelle la commande de vitesse de limitation est conçue en appliquant un critère d'optimisation, dans laquelle selon le critère d'optimisation dans
une courbe d'angle de pas montrant l'angle de pas en fonction du rapport de vitesse de pointe (*λ*) et du coefficient de puissance (Cp), dans laquelle
en partant d'une situation sans réduction de la poussée de rotor l'angle ne pas va être augmenté jusqu'à un angle de pas de limitation afin de réduire la poussée de rotor, le rapport de vitesse de pointe étant défini sur la base de l'angle de pas de limitation afin de trouver la puissance maximale.

13. Éolienne (100) selon la revendication 12, dans laquelle l'éolienne (100), en particulier la commande d'éolienne, est conçue pour faire fonctionner l'éolienne (100) selon un procédé selon l'une quelconque des revendications 1 à 11.

14. Agencement d'éoliennes (100) comprenant
- une première éolienne (100) selon les revendications 12 ou 13,
- une seconde éolienne (100) agencée à proximité de la première éolienne (100), et
- des moyens de communication connectant la première et la seconde éolienne (100) pour échanger des informations nécessaires au fonctionnement d'au moins la première éolienne (100).

15. Parc éolien (112) comprenant
- une pluralité d'éoliennes (100) avec au moins une éolienne (100) selon les revendications 12 ou 13 et facultativement
- une unité de commande centrale (122) afin de commander les éoliennes (100).
